# EUROPEAN PATENT APPLICATION

(11) **EP 4 832 614 A1**
(43) Date of publication of application: **28.10.2026**
(21) Application number: 23961984.4
(22) Date of filing: 22.12.2023
(51) Int. Cl.: H04W 72/0453, H04W 72/04

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); FU, Zhe, Dongguan, Guangdong 523860 (CN)
(74) Representative: RGTH
(86) International application number: PCT/CN2023/141147
(87) International publication number: WO 2025/129662

(57) **Abstract**

Provided is a wireless communication method, comprising: a terminal device receiving first information sent by a network device, wherein the first information is associated with a first bandwidth in a first cell, and the first cell comprises a plurality of different bandwidths. In embodiments of this application, a cell that may include a plurality of different bandwidths is introduced, which is conducive to reducing a quantity of cells in a communications system, compared to a conventional cell that can include only contiguous frequency domain resources within a band, thereby reducing a quantity of separate resources configured for different cells.

## Description

### TECHNICAL FIELD

This application relates to the field of communications technologies, and more specifically, to a wireless communication method, a terminal device, and a network device.

### BACKGROUND

Currently, separate resources are typically configured for different cells. For example, reference signals (for example, synchronization signal and physical broadcast channel blocks (synchronization signal and physical broadcast channel block, SSB)) are required to be defined separately for different cells. For another example, different cells occupy different hybrid automatic repeat request (hybrid automatic repeat request, HARQ) buffers. For still another example, each of different cells requires separate control channel resources. With the widespread application of communications systems, a quantity of cells is increasing. Correspondingly, a quantity of separate resources configured for different cells is also increasing, which may lead to higher complexity of communications devices in the communications system.

### SUMMARY

This application provides a wireless communication method, a terminal device, and a network device. The following describes the aspects related to this application.

According to a first aspect, a wireless communication method is provided, and includes: receiving, by a terminal device, first information transmitted by a network device, where the first information is associated with a first bandwidth in a first cell, and the first cell includes a plurality of different bandwidths.

According to a second aspect, a wireless communication method is provided, and includes: transmitting, by a network device, first information to a terminal device, where the first information is associated with a first bandwidth in a first cell, and the first cell includes a plurality of different bandwidths.

According to a third aspect, a terminal device is provided, and includes: a receiving unit, configured to receive first information transmitted by a network device, where the first information is associated with a first bandwidth in a first cell, and the first cell includes a plurality of different bandwidths.

According to a fourth aspect, a network device is provided, and includes: a transmitting unit, configured to transmit first information to a terminal device, where the first information is associated with a first bandwidth in a first cell, and the first cell includes a plurality of different bandwidths.

According to a fifth aspect, a terminal device is provided, and includes a processor, a memory, and a communications interface. The memory is configured to store one or more computer programs. The processor is configured to invoke the computer program in the memory, to cause the terminal device to execute some or all of the steps in the method according to the first aspect.

According to a sixth aspect, a network device is provided, and includes a processor, a memory, and a transceiver. The memory is configured to store one or more computer programs, and the processor is configured to invoke the computer program in the memory to cause the network device to execute some or all of the steps in the method according to the second aspect.

According to a seventh aspect, an embodiment of this application provides a communications system, where the system includes the foregoing terminal device and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program. The computer program causes a communications device (for example, a terminal device or a network device) to execute some or all of the steps in the method according to each of the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a network device) to execute some or all of the steps in the method according to each of the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement part or all of the steps described in the methods according to the foregoing aspects.

In embodiments of this application, a cell that may include a plurality of different bandwidths is introduced, which is conducive to reducing a quantity of cells in a communications system, compared to a conventional cell that can include only contiguous frequency domain resources within a band, thereby reducing a quantity of separate resources configured for different cells.

### BRIEF DESCRIPTION OF DRAWINGS

FIG. 1 shows a wireless communications system 100 to which embodiments of this application are applied.
FIG. 2 is a schematic diagram of a dual connectivity architecture to which embodiments of this application are applied.
FIG. 3 is a schematic diagram of a conventional bandwidth part (bandwidth part, BWP).
FIG. 4 is a schematic diagram of a first bandwidth and a second bandwidth according to an embodiment of this application.
FIG. 5 is a schematic diagram of a first bandwidth and a second bandwidth according to another embodiment of this application.
FIG. 6 is a schematic diagram of a first bandwidth and a second bandwidth according to another embodiment of this application.
FIG. 7 is a schematic diagram of a first bandwidth and a second bandwidth according to another embodiment of this application.
FIG. 8 is a schematic diagram of a first bandwidth and a second bandwidth according to another embodiment of this application.
FIG. 9 is a schematic flowchart of a wireless communication method according to an embodiment of this application.
FIG. 10 is a schematic flowchart of a wireless communication method according to another embodiment of this application.
FIG. 11 is a schematic flowchart of a wireless communication method according to another embodiment of this application.
FIG. 12 is a schematic diagram of a terminal device according to an embodiment of this application.
FIG. 13 is a schematic diagram of a network device according to an embodiment of this application.
FIG. 14 is a schematic structural diagram of a communications apparatus according to an embodiment of this application.

### DESCRIPTION OF EMBODIMENTS

Technical solutions in this application are described below with reference to the accompanying drawings.

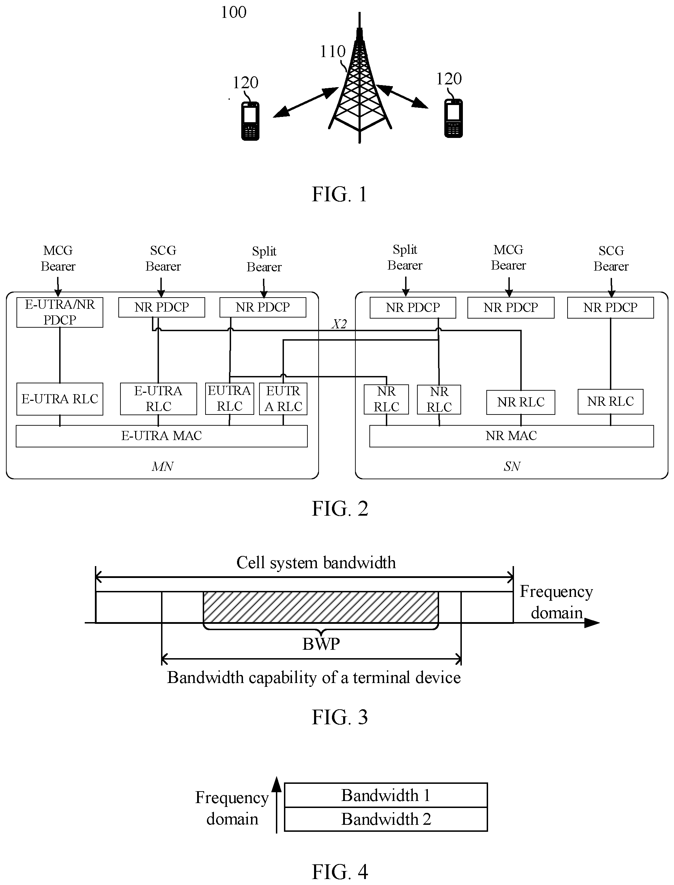

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 exemplarily shows one network device and two terminals. Optionally, the wireless communications system 100 may include a plurality of network devices, and another quantity of terminal devices may be included within coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, or an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be replaced with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may refer to a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

### Protocol stack architecture

In some communications systems (for example, 5G), in the case of a dual connectivity architecture, protocol stacks of a user plane and a control plane are relatively complex. This is described below with reference to FIG. 2.

Referring to FIG. 2, under the dual connectivity architecture, a network node consists of two nodes, namely a master node (master node, MN) and a secondary node (secondary node, SN). Packet data convergence protocol (packet data convergence protocol, PDCP) and service data adaptation protocol (service data adaptation protocol, SDAP) protocol stacks and corresponding protocol stacks below PDCP (for example, radio link control (radio link control, RLC), medium access control (media access control, MAC), and physical layer (physical layer, PHY layer)) may be located at different network nodes. Within a terminal device, there is no distinction between different nodes. However, there is an issue of roles of cell groups, that is, the terminal device is required to distinguish between a master cell group (master cell group, MCG) and a secondary cell group (secondary cell group, SCG). A difference between the MCG and the SCG arises from differences in protocol layers (that is, MAC and PHY) where different radio bearers are aggregated.

With continued reference to FIG. 2, for LTE and 5G dual connectivity (EUTRA-NR Dual Connection, EN-DC), from the perspective of a network side, when RLC, MAC, and PHY protocol stacks of a radio bearer are located at the MN, such a radio bearer is called an MCG bearer (bearer). Otherwise, it is called an SCG bearer. In addition, a spilt bearer (spilt bearer) has radio links at both the MN and the SN, but only one PDCP protocol stack. This PDCP protocol stack may be located at the MN or at the SN. The purpose of the split bearer is to increase traffic on the radio interface.

### Carrier aggregation

Within each cell group, one or more cells may be supported, to support a carrier aggregation function. In carrier aggregation (carrier aggregation, CA), two or more component carriers (component carrier, CC) are aggregated. A terminal device may perform reception or transmission simultaneously on one or more CCs based on its own capabilities.

In some implementations, a terminal device having a CA single timing advance (timing advance, TA) capability may perform reception and/or transmission simultaneously on a plurality of CCs. Generally, these CCs correspond to a plurality of serving cells that share the same timing advance, for example, the plurality of serving cells are grouped into one timing advance group (timing advance group, TAG).

In some other implementations, a terminal device having a CA multi-timing advance capability may receive and/or transmit different timing advances simultaneously on a plurality of CCs corresponding to the plurality of serving cells, where the plurality of serving cells are grouped into a plurality of TAGs.

Generally, a maximum quantity of CCs configured for a terminal device is as follows: 16 CCs for downlink transmission and 16 CCs for uplink transmission.

### Cell and BWP

At present, a carrier bandwidth in an NR system is much greater than a carrier bandwidth in an LTE system. In addition, most core frequency bands may support a typical carrier bandwidth of 100 MHz. A large bandwidth has an advantage of obtaining a high transmission rate. However, if a service mode involves small data transmission or intermittent traffic, it is very uneconomical for a terminal device to operate in a large bandwidth mode.

Therefore, to reduce power consumption of a terminal device, BWP is introduced. The purpose of BWP is to define a bandwidth that is less than both a carrier bandwidth of a cell and a bandwidth capability of a terminal device. Therefore, when an amount of data transmitted over an air interface is relatively small, the terminal device operates within a relatively small bandwidth under a dynamic configuration of the network device. Accordingly, a radio frequency front-end device, a radio frequency transceiver, and a baseband signal processing module of the terminal device may all operate within a relatively small bandwidth and under relatively low processing clock conditions, thereby reducing power consumption of the terminal device.

In addition, all transmission and reception operations of the terminal device may be performed within the BWP, thereby enabling the terminal device to achieve more flexible, more efficient, and lower-power communication even in a large-bandwidth system.

For example, referring to FIG. 3, in a large-bandwidth system (for example, 5G NR), a bandwidth capability (in other words, a cell system bandwidth) of a network device is increased significantly, with a maximum carrier bandwidth of 400 MHz, while an increase in a bandwidth capability of a terminal device lags significantly behind that of the network side, with a supported maximum carrier bandwidth of 100 MHz. After the BWP is introduced, the terminal device may perform communication within the BWP, which helps the large-bandwidth system be compatible with terminal devices of various capabilities, making communication of the terminal devices in the large-bandwidth system more flexible.

For another example, a traffic situation of the terminal device changes. Within some time periods, a traffic volume of the terminal device may surge, while in some time periods, it may decrease. In other words, the terminal device is not always required to operate at a maximum bandwidth capability. In this case, the network device may adjust, based on a traffic volume of the terminal device, a BWP in which the terminal device operates, thereby reducing power consumption of the terminal device while improving utilization of frequency domain resources in the communications system.

Based on the foregoing description, it may be learned that in some communications systems (for example, an NR system), a hierarchical support for concepts of cell group-cell and carrier-BWP is provided, where a cell group may include one or more cells, and a carrier may include one or more BWPs.

In some scenarios, the network device is required to configure a serving cell for the terminal device, so that the terminal device may communicate with the network device through the serving cell.

Currently, separate resources are typically configured for different cells. For example, reference signals (for example, SSBs) are required to be defined separately for different cells. For another example, different cells occupy different HARQ buffers. For still another example, each of different cells requires separate control channel resources. With the widespread application of communications systems, a quantity of cells is increasing. Correspondingly, a quantity of separate resources configured for different cells is also increasing, which may lead to higher complexity of communications devices in the communications system.

Therefore, for the foregoing problems, the applicant proposes redefining a cell, that is, the cell (also referred to as a first cell) may include a plurality of different bandwidths, which is conducive to reducing a quantity of cells in the communications system, thereby reducing a quantity of separate resources configured for different cells.

In some implementations, the first cell may include a plurality of bandwidths. In other words, the first cell includes a plurality of different bandwidths, where the plurality of bandwidths include a first bandwidth.

In embodiments of this application, the bandwidths described above are not limited. In some implementations, a bandwidth may be understood as a frequency range. Accordingly, the first bandwidth may be replaced with a first frequency range, and the plurality of bandwidths may be replaced with a plurality of frequency ranges. The frequency ranges may be contiguous in frequency domain. For example, the frequency range may be a BWP. Accordingly, the first bandwidth may be a first BWP, and the plurality of bandwidths may be a plurality of BWPs.

It should be understood that names of the bandwidths described above are not limited in embodiments of this application. For example, the first bandwidth may be referred to as a first frequency band, and the plurality of bandwidths may be referred to as a plurality of frequency bands. For another example, the first bandwidth may be referred to as a first frequency domain range, and the plurality of bandwidths may also be referred to as a plurality of frequency domain ranges.

In some implementations, at least two bandwidths among the plurality of bandwidths may satisfy one or more of the following: the at least two bandwidths are contiguous in frequency domain; the at least two bandwidths are non-contiguous in frequency domain; the at least two bandwidths are located in different frequency bands; or the at least two bandwidths partially or fully overlap in frequency domain. For ease of understanding, at least two bandwidths in embodiments of this application are described below by using a bandwidth 1 and bandwidth 2 as examples.

For example, the bandwidth 1 and the bandwidth 2 are contiguous in frequency domain. In some implementations, as shown in FIG. 4, if a frequency domain range of the bandwidth 1 is greater than a frequency domain range of the bandwidth 2, a frequency domain start position of the bandwidth 1 may be the same as a frequency domain end position of the bandwidth 2. Certainly, in embodiments of this application, if the frequency domain range of the bandwidth 1 is less than the frequency domain range of the bandwidth 2, a frequency domain end position of the bandwidth 1 may be the same as a frequency domain start position of the bandwidth 2.

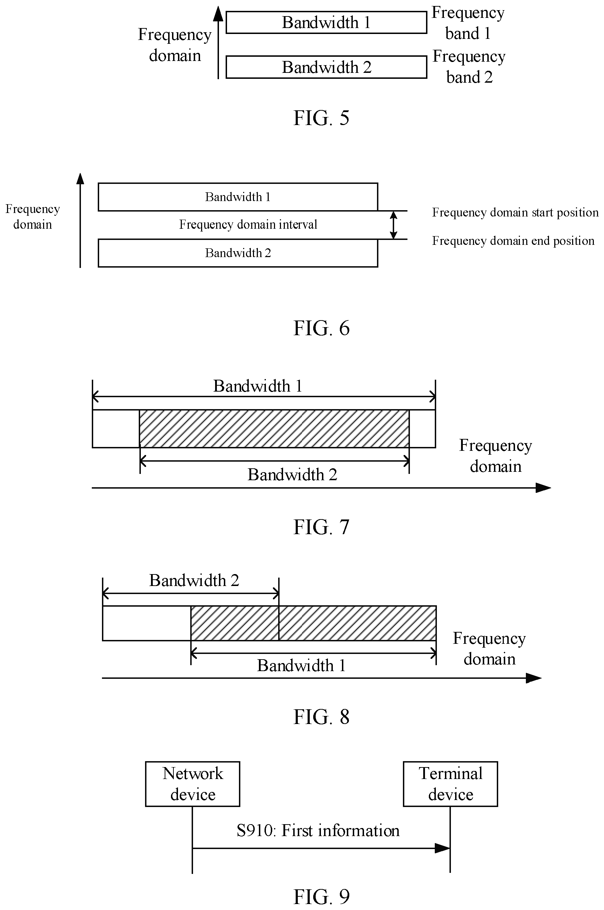

For example, the bandwidth 1 and the bandwidth 2 are located in different frequency bands. In other words, the first cell may include frequency domain resources across frequency bands, which is conducive to grouping frequency domain resources across frequency bands into one cell, compared to a conventional cell that can include only contiguous frequency domain resources within a band, thereby reducing a quantity of cells. For example, as shown in FIG. 5, the bandwidth 1 is located in a frequency band 1, and the bandwidth 2 is located in a frequency band 2, where the frequency band 1 and the frequency band 2 are different frequency bands.

For example, the bandwidth 1 and the bandwidth 2 are non-contiguous in frequency domain. In other words, the bandwidth 1 and the bandwidth 2 are distributed at an interval in frequency domain. For example, as shown in FIG. 6, if the frequency domain range of the bandwidth 1 is greater than the frequency domain range of the bandwidth 2, the frequency domain start position of the bandwidth 1 and the frequency domain end position of the bandwidth 2 are separated by a frequency domain interval. For another example, if the frequency domain range of the bandwidth 1 is less than the frequency domain range of the bandwidth 2, the frequency domain end position of the bandwidth 1 and the frequency domain start position of the bandwidth 2 are separated by a frequency domain interval.

The cell defined in embodiments of this application may include the bandwidth 1 and the bandwidth 2 that are non-contiguous in frequency domain. In other words, the defined cell may include frequency domain resources that are non-contiguous in frequency domain, which is conducive to grouping frequency domain resources that are non-contiguous in frequency domain into one cell, compared to a conventional cell that can include only contiguous frequency domain resources, thereby reducing a quantity of cells.

For example, the bandwidth 1 and the bandwidth 2 partially or fully overlap in frequency domain. In some implementations, the bandwidth 1 and the bandwidth 2 fully overlapping in frequency domain may be understood as the frequency domain range of the bandwidth 1 being the same as the frequency domain range of the bandwidth 2.

In some other implementations, the bandwidth 1 and the bandwidth 2 partially overlap in frequency domain. As shown in FIG. 7, the partial overlapping described above may be understood as the frequency domain range of the bandwidth 1 containing the frequency domain range of the bandwidth 2. In other words, the frequency domain range of the bandwidth 2 belongs to the frequency domain range of the bandwidth 1. Certainly, in embodiments of this application, the partial overlapping described above may be understood as the frequency domain range of the bandwidth 2 containing the frequency domain range of the bandwidth 1. In other words, the frequency domain range of the bandwidth 1 belongs to the frequency domain range of the bandwidth 2.

Certainly, in embodiments of this application, the partial overlapping described above may be understood as a partial frequency domain range of the bandwidth 1 overlapping with a partial frequency domain range of the bandwidth 2. For example, as shown in FIG. 8, the frequency domain start position of the bandwidth 1 is within the frequency domain range of the bandwidth 2, and the frequency domain start position of the bandwidth 1 does not overlap with the frequency domain start position of the bandwidth 2. Certainly, in embodiments of this application, the frequency domain start position of the bandwidth 2 is within the frequency domain range of the bandwidth 1, and the frequency domain start position of the bandwidth 1 does not overlap with the frequency domain start position of the bandwidth 2.

In embodiments of this application, the frequency domain positions of the bandwidth 1 and the bandwidth 2 described above may be used individually or in combination. For example, the bandwidth 1 and the bandwidth 2 are located in different frequency bands, and the bandwidth 1 and the bandwidth 2 are contiguous in frequency domain. For another example, the bandwidth 1 and the bandwidth 2 are located in different frequency bands, and the bandwidth 1 and the bandwidth 2 are non-contiguous in frequency domain. For another example, the bandwidth 1 and the bandwidth 2 are located in different frequency bands, and the bandwidth 1 and the bandwidth 2 partially or fully overlap in frequency domain. For another example, the bandwidth 1 and the bandwidth 2 partially overlap in frequency domain, and the bandwidth 1 and the bandwidth 2 are contiguous in frequency domain.

It should be noted that a quantity of bandwidths included in the first cell is not limited in embodiments of this application. For example, the first cell may include the bandwidth 1 and the bandwidth 2 described above. For another example, the first cell may include a plurality of bandwidths, where the bandwidth 1 and the bandwidth 2 may be understood as two specific bandwidths among the plurality of bandwidths.

Based on a relationship between the bandwidths (including the bandwidth 1 and/or the bandwidth 2) and the first cell described above, it may be learned that the relationship between the bandwidth and the cell is similar to a relationship between a cell and a cell group in a known communications system, where the bandwidth in embodiments of this application is analogous to the cell in the known communications system, and accordingly, the cell in embodiments of this application is analogous to the cell group in the known communications system. In other words, in embodiments of this application, one cell may be used to aggregate a plurality of conventional carriers, thereby being conducive to preventing a quantity of cells from increasing linearly with aggregated frequency domain resources.

The first cell in embodiments of this application is described above. A solution in embodiments of this application is described below from the perspective of first information. FIG. 9 is a schematic flowchart of a wireless communication method according to an embodiment of this application.

In step S910, a network device transmits first information to a terminal device, where the first information is associated with the first bandwidth.

In some implementations, the first information is used for mobility management of the terminal device based on the first bandwidth, which is described below with reference to Embodiments 1 to 3.
**Embodiment 1**: the first information is used for instructing the terminal device to switch from the first bandwidth to a second bandwidth.

In embodiments of this application, the terminal device may be instructed, based on the first information, to perform switching at a granularity of a bandwidth. In other words, a granularity for indication by the first information is a bandwidth, without a need to perform switching at a granularity of a cell as in conventional solutions.

In some implementations, the second bandwidth and the first bandwidth may be located in a same cell (for example, the first cell described above). In this case, frequency domain positions of the second bandwidth and the first bandwidth may be any one of those described above with reference to FIG. 4 to FIG. 8. Certainly, in embodiments of this application, the second bandwidth and the first bandwidth may belong to different cells. For example, the first bandwidth belongs to a second cell, and the second cell is different from the first cell.

In embodiments of this application, the second cell is not limited. For example, the second cell may be a new cell proposed in embodiments of this application. In this case, a definition of the second cell is similar to a definition of the first cell, and reference may be made to the foregoing description. Certainly, in embodiments of this application, the second cell may be a conventional cell.

In embodiments of this application, the first information is used for instructing the terminal device to switch from the first bandwidth to the second bandwidth. Therefore, the first bandwidth may also be referred to as a "source bandwidth", and accordingly, the second bandwidth may be referred to as a "target bandwidth".

In some implementations, switching for the first bandwidth is triggered based on mobility of the terminal device. For example, when the terminal device moves from a service area corresponding to the first bandwidth to a service area corresponding to the second bandwidth, the switching described above may be triggered. Certainly, in embodiments of this application, the switching for the first bandwidth may alternatively be triggered based on a service requirement of the terminal device. For example, if a traffic volume associated with the terminal device increases and the second bandwidth is greater than the first bandwidth, the switching described above may be triggered.

In some implementations, the first information may be carried in physical layer signalling, which is conducive to reducing a delay for the terminal device to perform bandwidth switching. Certainly, in embodiments of this application, the first information may alternatively be carried in a medium access control control element (media access control control element, MAC CE).

In some implementations, the first information includes one or more of the following: information for indicating whether to perform MAC reset (MAC reset), where the MAC reset is used to clear MAC layer buffer related to the first bandwidth; information for indicating whether to perform a key change; information for indicating whether to re-establish a radio link control (radio link control, RLC) entity; information for indicating whether to re-configure a packet data convergence protocol (packet data convergence protocol, PDCP); information for indicating whether to re-establish a packet data convergence protocol PDCP; or information for indicating whether to perform packet data convergence protocol PDCP data recovery.

In some other implementations, the first information may be used for indicating one or more of the following: performing MAC reset; performing a key change; re-establishing an RLC entity; re-configuring a PDCP; re-establishing a PDCP; or performing PDCP data recovery.

It should be noted that the first information may be used for implicitly instructing to perform the foregoing operation. For example, if the terminal device receives the first information, the terminal device may determine to perform the foregoing operation. In this case, the first information may not carry information for instructing to perform the foregoing operation, which is conducive to reducing overheads of transmitting the first information. Otherwise, if the terminal device does not receive the first information, the terminal device determines not to perform the foregoing operation. Certainly, in embodiments of this application, the first information may be used for explicitly instructing to perform the foregoing operation. For example, if the terminal device receives the first information, the terminal device may determine to perform the foregoing operation. In this case, how the foregoing operation is specifically performed depends on one or more bits carried in the first information, and these bits are used for the information for instructing to perform the foregoing operation.

In embodiments of this application, the first information may indicate bandwidth switching while also indicating whether the terminal device is to perform the foregoing operation, which is conducive to reducing a delay required for the terminal device to perform bandwidth switching. Certainly, in embodiments of this application, the information for indicating whether the terminal device is required to perform the foregoing operation may be transmitted separately (for example, by using third information). In other words, in some implementations, the foregoing method further includes: transmitting, by the network device, third information to the terminal device, where the third information is different from the first information.

In some implementations, the third information may be transmitted prior to the first information, which is conducive to reducing a delay required for the terminal device to perform switching. Certainly, in embodiments of this application, the third information may alternatively be transmitted after the first information.

In some implementations, the third information is a radio resource control (radio resource control, RRC) message. For example, the first information is physical layer signalling, and the third information is an RRC message.

In some implementations, the information (for example, the first information or the third information) for indicating whether the terminal device is to perform the foregoing operation may be used for indication at a granularity of a bearer of the terminal device. In other words, whether the foregoing operation is to be performed is indicated at the granularity of the bearer.

In some implementations, the foregoing method further includes: transmitting, by the network device, configuration information to the terminal device, where the configuration information is used for configuring the first bandwidth and/or the second bandwidth for the terminal device, so that the terminal device can identify the first bandwidth and the second bandwidth.

In embodiments of this application, the foregoing configuration information is not limited. For example, if the configuration information is used for configuring the first bandwidth for the terminal device, the configuration information may be used for indicating a center frequency of the first bandwidth, and/or a frequency domain width of the first bandwidth. For another example, if the configuration information is used for configuring the second bandwidth for the terminal device, the configuration information may be used for indicating a center frequency of the second bandwidth, and/or a frequency domain width of the second bandwidth.

In some implementations, the foregoing configuration information is carried in a radio resource control RRC configuration. Certainly, the foregoing configuration information may alternatively be carried in other information.
**Embodiment 2**: the first information is used for instructing to activate the first bandwidth.

In embodiments of this application, the terminal device may be instructed, based on the first information, to perform activation at a granularity of a bandwidth. In other words, a granularity for indication by the first information is a bandwidth, without a need to perform activation at a granularity of a cell as in conventional solutions.

In some implementations, an activation start time of the second bandwidth is earlier than an activation start time of the first bandwidth, and a deactivation time of the second bandwidth is later than the activation start time of the first bandwidth. In other words, an activation time of the first bandwidth partially overlaps with an activation time of the second bandwidth, which is conducive to improving reliability of the terminal device performing communication at the bandwidth level. Certainly, in embodiments of this application, the activation time of the first bandwidth does not overlap with the activation time of the second bandwidth.

In embodiments of this application, the activation start time of the second bandwidth is earlier than the activation start time of the first bandwidth. Therefore, the second bandwidth may also be referred to as a "source bandwidth", and accordingly, the first bandwidth may be referred to as a "target bandwidth".

In some implementations, the second bandwidth and the first bandwidth may be located in a same cell (for example, the first cell described above). In this case, frequency domain positions of the second bandwidth and the first bandwidth may be any one of those described above with reference to FIG. 4 to FIG. 8. Certainly, in embodiments of this application, the second bandwidth and the first bandwidth may belong to different cells. For example, the first bandwidth belongs to a second cell, and the second cell is different from the first cell.

In embodiments of this application, the second cell is not limited. For example, the second cell may be a new cell proposed in embodiments of this application. In this case, a definition of the second cell is similar to a definition of the first cell, and reference may be made to the foregoing description. Certainly, in embodiments of this application, the second cell may be a conventional cell.

In some implementations, the foregoing method further includes: transmitting, by the network device, second information to the terminal device, where the second information is used for instructing to deactivate the second bandwidth, which is conducive to reducing power consumption of the terminal device. For example, after the network device instructs the terminal device to activate the first bandwidth, the network device may transmit the second information to the terminal device, to instruct to deactivate the second bandwidth.

In some implementations, activation for the first bandwidth is triggered based on mobility of the terminal device. For example, when the terminal device moves from a service area corresponding to the second bandwidth to a service area corresponding to the first bandwidth, the activation described above may be triggered. Certainly, in embodiments of this application, the activation for the first bandwidth may alternatively be triggered based on a service requirement of the terminal device. For example, if a traffic volume associated with the terminal device increases and the first bandwidth is greater than the first bandwidth, the activation described above may be triggered.

In some implementations, the first information may be carried in physical layer signalling, which is conducive to reducing a delay for the terminal device to perform bandwidth activation. Certainly, in embodiments of this application, the first information may alternatively be carried in a MAC CE.

In some implementations, the first information includes one or more of the following: information for indicating whether to perform MAC reset; information for indicating whether to perform a key change; information for indicating whether to re-establish an RLC entity; information for indicating whether to re-configure a packet data convergence protocol PDCP; information for indicating whether to re-establish a packet data convergence protocol PDCP; or information for indicating whether to perform packet data convergence protocol PDCP data recovery.

In some other implementations, the first information may be used for indicating one or more of the following: performing MAC reset; performing a key change; re-establishing an RLC entity; re-configuring a PDCP; re-establishing a PDCP; or performing PDCP data recovery.

It should be noted that the first information may be used for implicitly instructing to perform the foregoing operation. For example, if the terminal device receives the first information, the terminal device may determine to perform the foregoing operations. In this case, the first information may not carry information for instructing to perform the foregoing operation, which is conducive to reducing overheads of transmitting the first information. Otherwise, if the terminal device does not receive the first information, the terminal device determines not to perform the foregoing operation. Certainly, in embodiments of this application, the first information may be used for explicitly instructing to perform the foregoing operation. For example, if the terminal device receives the first information, the terminal device may determine to perform the foregoing operation. In this case, how the foregoing operation is specifically performed depends on one or more bits carried in the first information, and these bits are used for the information for instructing to perform the foregoing operation.

In embodiments of this application, the first information may indicate bandwidth activation while also indicating whether the terminal device is to perform the foregoing operation, which is conducive to reducing a delay required for the terminal device to perform bandwidth activation. Certainly, in embodiments of this application, the information for indicating whether the terminal device is required to perform the foregoing operation may be transmitted separately (for example, by using third information). In other words, in some implementations, the foregoing method further includes: transmitting, by the network device, third information to the terminal device, where the third information is different from the first information.

In some implementations, the third information may be transmitted prior to the first information, which is conducive to reducing a delay required for the terminal device to perform switching. Certainly, in embodiments of this application, the third information may alternatively be transmitted after the first information.

In some implementations, the third information is an RRC message. For example, the first information is physical layer signalling, and the third information is an RRC message.

In some implementations, the information (for example, the first information or the third information) for indicating whether the terminal device is to perform the foregoing operation may be used for indication at a granularity of a bearer of the terminal device. In other words, whether the foregoing operation is to be performed is indicated at the granularity of the bearer.

In some implementations, the foregoing method further includes: transmitting, by the network device, configuration information to the terminal device, where the configuration information is used for configuring the first bandwidth and/or the second bandwidth for the terminal device, so that the terminal device can identify the first bandwidth and the second bandwidth.

In embodiments of this application, the foregoing configuration information is not limited. For example, if the configuration information is used for configuring the first bandwidth for the terminal device, the configuration information may be used for indicating a center frequency of the first bandwidth, and/or a frequency domain width of the first bandwidth. For another example, if the configuration information is used for configuring the second bandwidth for the terminal device, the configuration information may be used for indicating a center frequency of the second bandwidth, and/or a frequency domain width of the second bandwidth.

In some implementations, the foregoing configuration information is carried in a radio resource control RRC configuration. Certainly, the foregoing configuration information may alternatively be carried in other information.
**Embodiment 3**: the first information is used for configuring the first bandwidth for the terminal device.

In embodiments of this application, the foregoing configuration information is not limited. For example, if the configuration information is used for configuring the first bandwidth for the terminal device, the configuration information may be used for indicating a center frequency of the first bandwidth, and/or a frequency domain width of the first bandwidth. For another example, if the configuration information is used for configuring the second bandwidth for the terminal device, the configuration information may be used for indicating a center frequency of the second bandwidth, and/or a frequency domain width of the second bandwidth.

In some implementations, the foregoing configuration information is carried in a radio resource control RRC configuration. Certainly, the foregoing configuration information may alternatively be carried in other information.

It should be noted that, in embodiments of this application, after the first bandwidth is configured for the terminal device based on the first information, the terminal device may perform switching based on the first bandwidth, or activate the first bandwidth. For a specific process, reference may be made to related descriptions in Embodiment 1 and Embodiment 2. For brevity, details are not described again below.

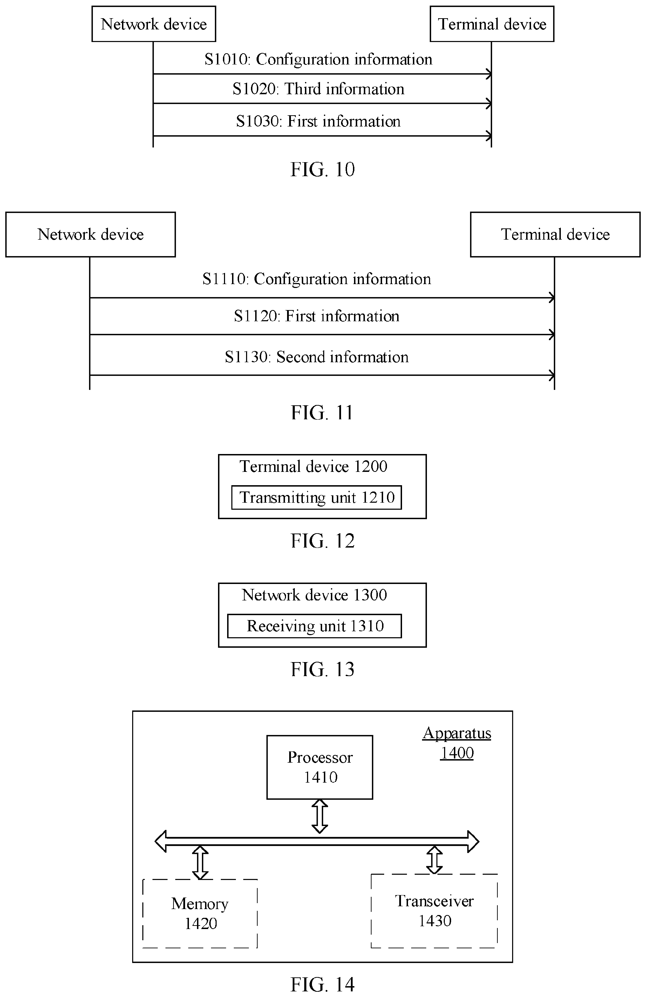

For ease of understanding, the wireless communication method in embodiments of this application is described below with reference to FIG. 10 and FIG. 11. It is assumed that the first bandwidth is the first BWP, and the second bandwidth is the second BWP.

Referring to FIG. 10, in step S1010, a network device transmits configuration information to a terminal device, where the configuration information is used for configuring the first BWP and the second BWP for the terminal device.

In step S1020, the network device transmits third information to the terminal device, where the third information includes one or more of the following: information for indicating whether to perform MAC reset for a bearer 1, or information for indicating whether to perform a key change for a bearer 1.

In step S1030, the network device transmits first information to the terminal device, where the first information is used for instructing the terminal device to switch from the first BWP to the second BWP.

Referring to FIG. 11, in step S1110, the network device transmits configuration information to the terminal device, where the configuration information is used for configuring the first BWP for the terminal device.

In step S1120, the network device transmits first information to the terminal device, where the first information is used for instructing the terminal device to activate the first BWP.

In some implementations, the first information includes one or more of the following: information for indicating whether to perform MAC reset for the bearer 1; information for indicating whether to perform a key change for the bearer 1; information for indicating whether to re-establish an RLC entity for the bearer 1; information for indicating whether to re-configure a PDCP for the bearer 1; information for indicating whether to re-establish a PDCP for the bearer 1; or information for indicating whether to perform PDCP data recovery for the bearer 1.

In step S1130, the network device transmits second information to the terminal device, where the second information is used for instructing the terminal device to deactivate the second BWP.

The method embodiments of this application are described above in detail with reference to FIG. 1 to FIG. 11. Apparatus embodiments of this application are described below in detail with reference to FIG. 12 to FIG. 14. It should be understood that the descriptions of the method embodiments correspond to descriptions of the apparatus embodiments, and therefore, for parts that are not described in detail, reference may be made to the foregoing method embodiments.

FIG. 12 is a schematic diagram of a terminal device according to an embodiment of this application. The terminal device 1200 shown in FIG. 12 includes a receiving unit 1210.

The receiving unit 1210 is configured to receive first information transmitted by a network device, where the first information is associated with a first bandwidth in a first cell, which includes a plurality of different bandwidths.

In some implementations, the first information is used for instructing the terminal device to switch from the first bandwidth to a second bandwidth.

In some implementations, the first information is used for instructing to activate the first bandwidth.

In some implementations, an activation start time of the first bandwidth is later than an activation start time of a second bandwidth, and a deactivation time of the second bandwidth is later than the activation start time of the first bandwidth.

In some implementations, the terminal device further includes: receiving, by the terminal device, second information transmitted by the network device, where the second information is used for instructing to deactivate the second bandwidth.

In some implementations, a granularity for indication by the first information is a bandwidth in the first cell.

In some implementations, the first information is physical layer signalling or a medium access control control element MAC CE.

In some implementations, the first information includes one or more of the following: information for indicating whether to perform MAC reset; information for indicating whether to perform a key change; information for indicating whether to re-establish an RLC entity; information for indicating whether to re-configure a packet data convergence protocol PDCP; information for indicating whether to re-establish a PDCP; information for indicating whether to perform PDCP data recovery; information for instructing to perform MAC reset; information for instructing to perform a key change; information for instructing to re-establish an RLC entity; information for instructing to re-configure a PDCP; information for instructing to re-establish a PDCP; or information for instructing to perform PDCP data recovery.

In some implementations, the receiving unit is further configured to receive third information transmitted by the network device, where the third information includes one or more of the following: information for indicating whether to perform MAC reset; information for indicating whether to perform key switching; information for indicating whether to update a MAC entity; information for indicating whether to re-configure a PDCP; information for indicating whether to perform data recovery; information for instructing to perform MAC reset; information for instructing to perform a key change; information for instructing to re-establish an RLC entity; information for instructing to re-configure a PDCP; information for instructing to re-establish a PDCP; or information for instructing to perform PDCP data recovery.

In some implementations, the first information is physical layer signalling, and/or the third information is an RRC message.

In some implementations, a granularity for indication by at least one of the first information or the third information is a bearer of the terminal device.

In some implementations, the receiving unit is further configured to receive configuration information transmitted by the network device, where the configuration information is used for configuring the first bandwidth and/or the second bandwidth for the terminal device.

In some implementations, the configuration information is a radio resource control RRC configuration, and/or the first information is physical layer signalling or a MAC CE.

In some implementations, the first information is used for configuring the first bandwidth for the terminal device.

In some implementations, the first information is an RRC configuration.

In some implementations, switching for the first bandwidth is triggered based on a service requirement of the terminal device, or switching for the first bandwidth is triggered based on mobility of the terminal device.

In some implementations, the first bandwidth is a first bandwidth part BWP, and/or the second bandwidth is a second BWP.

In some implementations, the first bandwidth and the second bandwidth belong to the first cell, or the first bandwidth and the second bandwidth belong to different cells.

In some implementations, at least two bandwidths among the plurality of bandwidths satisfy one or more of the following: the at least two bandwidths are contiguous in frequency domain; the at least two bandwidths are non-contiguous in frequency domain; the at least two bandwidths are located in different frequency bands; or the at least two bandwidths partially or fully overlap in frequency domain.

FIG. 13 is a schematic diagram of a network device according to an embodiment of this application. The network device 1300 shown in FIG. 13 includes a transmitting unit 1310.

The transmitting unit 1310 is configured to transmit first information to a terminal device, where the first information is associated with a first bandwidth in a first cell, and the first cell includes a plurality of different bandwidths.

In some implementations, the first information is used for instructing the terminal device to switch from the first bandwidth to a second bandwidth.

In some implementations, the first information is used for instructing to activate the first bandwidth.

In some implementations, an activation start time of the first bandwidth is later than an activation start time of a second bandwidth, and a deactivation time of the second bandwidth is later than the activation start time of the first bandwidth.

In some implementations, the transmitting unit is configured to transmit second information to the terminal device, where the second information is used for instructing to deactivate the second bandwidth.

In some implementations, a granularity for indication by the first information is a bandwidth in the first cell.

In some implementations, the first information is physical layer signalling or a medium access control control element MAC CE.

In some implementations, the first information includes one or more of the following: information for indicating whether to perform MAC reset; information for indicating whether to perform a key change; information for indicating whether to re-establish an RLC entity; information for indicating whether to re-configure a packet data convergence protocol PDCP; information for indicating whether to re-establish a PDCP; information for indicating whether to perform PDCP data recovery; information for instructing to perform MAC reset; information for instructing to perform a key change; information for instructing to re-establish an RLC entity; information for instructing to re-configure a PDCP; information for instructing to re-establish a PDCP; or information for instructing to perform PDCP data recovery.

In some implementations, the transmitting unit is configured to transmit third information to the terminal device, where the third information includes one or more of the following: information for indicating whether to perform MAC reset; information for indicating whether to perform key switching; information for indicating whether to update a MAC entity; information for indicating whether to re-configure a PDCP; information for indicating whether to perform data recovery; information for instructing to perform MAC reset; information for instructing to perform a key change; information for instructing to re-establish an RLC entity; information for instructing to re-configure a PDCP; information for instructing to re-establish a PDCP; or information for instructing to perform PDCP data recovery.

In some implementations, the first information is physical layer signalling, and/or the third information is an RRC message.

In some implementations, a granularity for indication by at least one of the first information or the third information is a bearer of the terminal device.

In some implementations, the transmitting unit is configured to transmit configuration information to the terminal device, where the configuration information is used for configuring the first bandwidth and/or the second bandwidth for the terminal device.

In some implementations, the configuration information is a radio resource control RRC configuration, and/or the first information is physical layer signalling or a MAC CE.

In some implementations, the first information is used for configuring the first bandwidth for the terminal device.

In some implementations, the first information is an RRC configuration.

In some implementations, switching for the first bandwidth is triggered based on a service requirement of the terminal device, or switching for the first bandwidth is triggered based on mobility of the terminal device.

In some implementations, the first bandwidth is a first bandwidth part BWP, and/or the second bandwidth is a second BWP.

In some implementations, the first bandwidth and the second bandwidth belong to the first cell, or the first bandwidth and the second bandwidth belong to different cells.

In some implementations, at least two bandwidths among the plurality of bandwidths satisfy one or more of the following: the at least two bandwidths are contiguous in frequency domain; the at least two bandwidths are non-contiguous in frequency domain; the at least two bandwidths are located in different frequency bands; or the at least two bandwidths partially or fully overlap in frequency domain.

In an optional embodiment, the receiving unit 1210 may be a transceiver 1430. The terminal device 1200 may further include a processor 1410 and a memory 1420, as shown in FIG. 14.

In an optional embodiment, the transmitting unit 1310 may be a transceiver 1430. The network device 1300 may further include the processor 1410 and the memory 1420, as shown in FIG. 14.

FIG. 14 is a schematic structural diagram of a communications apparatus according to an embodiment of this application. The dashed lines in FIG. 14 indicate that the unit or module is optional. The apparatus 1400 may be configured to implement the method described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program, where the program may be executed by the processor 1410, to cause the processor 1410 to execute the methods described in the method embodiments. The memory 1420 may be separated from or integrated into the processor 1410.

The apparatus 1400 may further include a transceiver 1430. The processor 1410 may communicate with another device or chip through a transceiver 1430. For example, the processor 1410 may transmit data to and receive data from another device or chip through the transceiver 1430.

An embodiment of this application further provides a computer-readable storage medium, configured to store a program. The computer-readable storage medium may be applied to the terminal or the network device provided in the embodiments of this application, and the program causes the computer to execute the method executed by the terminal or the network device in the embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indicate" mentioned herein may refer to a direct indication, or may refer to an indirect indication, or may mean that there is an association relationship. For example, A indicates B, which may mean that A directly indicates B, for example, B may be obtained by using A; or may mean that A indirectly indicates B, for example, A indicates C, and B may be obtained by using C; or may mean that there is an association relationship between A and B.

In embodiments of this application, "B corresponding to A" means that B is associated with A, and B may be determined based on A. However, it should be further understood that determining B according to A does not mean determining B according to A only, and may further determine B according to A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that can be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may be or may not be physically separate, and parts displayed as units may be or may not be physical units, and may be at one location, or may be distributed on a plurality of network elements. A part or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, first information transmitted by a network device, wherein the first information is associated with a first bandwidth in a first cell, and the first cell comprises a plurality of different bandwidths.

2. The method according to claim 1, wherein the first information is used for instructing the terminal device to switch from the first bandwidth to a second bandwidth.

3. The method according to claim 1, wherein the first information is used for instructing to activate the first bandwidth.

4. The method according to claim 3, wherein an activation start time of the first bandwidth is later than an activation start time of a second bandwidth, and a deactivation time of the second bandwidth is later than the activation start time of the first bandwidth.

5. The method according to claim 3 or 4, wherein the method further comprises:
receiving, by the terminal device, second information transmitted by the network device, wherein the second information is used for instructing to deactivate the second bandwidth.

6. The method according to any one of claims 1 to 5, wherein a granularity for indication by the first information is a bandwidth in the first cell.

7. The method according to any one of claims 1 to 6, wherein the first information is physical layer signalling or a medium access control control element MAC CE.

8. The method according to any one of claims 2 to 7, wherein the first information comprises one or more of following:
information for indicating whether to perform MAC reset;
information for indicating whether to perform a key change;
information for indicating whether to re-establish a radio link control RLC entity;
information for indicating whether to re-configure a packet data convergence protocol PDCP;
information for indicating whether to re-establish a PDCP;
information for indicating whether to perform PDCP data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

9. The method according to any one of claims 2 to 7, wherein the method further comprises:
receiving, by the terminal device, third information transmitted by the network device, wherein the third information comprises one or more of following:
information for indicating whether to perform MAC reset;
information for indicating whether to perform key switching;
information for indicating whether to update a MAC entity;
information for indicating whether to re-configure a PDCP;
information for indicating whether to perform data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

10. The method according to claim 9, wherein the first information is physical layer signalling, and/or the third information is a radio resource management RRC message.

11. The method according to any one of claims 8 to 10, wherein a granularity for indication by at least one of the first information or the third information is a bearer of the terminal device.

12. The method according to any one of claims 2 to 5, wherein the method further comprises:
receiving, by the terminal device, configuration information transmitted by the network device, wherein the configuration information is used for configuring the first bandwidth and/or the second bandwidth for the terminal device.

13. The method according to claim 12, wherein the configuration information is an RRC configuration, and/or
the first information is physical layer signalling or a MAC CE.

14. The method according to claim 1, wherein the first information is used for configuring the first bandwidth for the terminal device.

15. The method according to claim 14, wherein the first information is an RRC configuration.

16. The method according to any one of claims 1 to 15, wherein switching for the first bandwidth is triggered based on a service requirement of the terminal device, or
switching for the first bandwidth is triggered based on mobility of the terminal device.

17. The method according to any one of claims 2 to 5 and 12, wherein the first bandwidth is a first bandwidth part BWP, and/or the second bandwidth is a second BWP.

18. The method according to any one of claims 2 to 5, 12, and 17, wherein the first bandwidth and the second bandwidth belong to the first cell, or
the first bandwidth and the second bandwidth belong to different cells.

19. The method according to any one of claims 1 to 18, wherein at least two bandwidths among the plurality of bandwidths satisfy one or more of following:
the at least two bandwidths are contiguous in frequency domain;
the at least two bandwidths are non-contiguous in frequency domain;
the at least two bandwidths are located in different frequency bands; or
the at least two bandwidths partially or fully overlap in frequency domain.

20. A wireless communication method, comprising:
transmitting, by a network device, first information to a terminal device, wherein the first information is associated with a first bandwidth in a first cell, and the first cell comprises a plurality of different bandwidths.

21. The method according to claim 20, wherein the first information is used for instructing the terminal device to switch from the first bandwidth to a second bandwidth.

22. The method according to claim 20, wherein the first information is used for instructing to activate the first bandwidth.

23. The method according to claim 22, wherein an activation start time of the first bandwidth is later than an activation start time of a second bandwidth, and a deactivation time of the second bandwidth is later than the activation start time of the first bandwidth.

24. The method according to claim 22 or 23, wherein the method further comprises:
transmitting, by the network device, second information to the terminal device, wherein the second information is used for instructing to deactivate the second bandwidth.

25. The method according to any one of claims 20 to 24, wherein a granularity for indication by the first information is a bandwidth in the first cell.

26. The method according to any one of claims 20 to 25, wherein the first information is physical layer signalling or a medium access control control element MAC CE.

27. The method according to any one of claims 21 to 26, wherein the first information comprises one or more of following:
information for indicating whether to perform MAC reset;
information for indicating whether to perform a key change;
information for indicating whether to re-establish an RLC entity;
information for indicating whether to re-configure a packet data convergence protocol PDCP;
information for indicating whether to re-establish a PDCP;
information for indicating whether to perform PDCP data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

28. The method according to any one of claims 21 to 26, wherein the method further comprises:
transmitting, by the network device, third information to the terminal device, wherein the third information comprises one or more of following:
information for indicating whether to perform MAC reset;
information for indicating whether to perform key switching;
information for indicating whether to update a MAC entity;
information for indicating whether to re-configure a PDCP;
information for indicating whether to perform data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

29. The method according to claim 28, wherein the first information is physical layer signalling, and/or the third information is an RRC message.

30. The method according to claim 27 or 28, wherein a granularity for indication by at least one of the first information or the third information is a bearer of the terminal device.

31. The method according to any one of claims 21 to 24, wherein the method further comprises:
transmitting, by the network device, configuration information to the terminal device, wherein the configuration information is used for configuring the first bandwidth and/or the second bandwidth for the terminal device.

32. The method according to claim 31, wherein the configuration information is a radio resource control RRC configuration, and/or
the first information is physical layer signalling or a MAC CE.

33. The method according to claim 20, wherein the first information is used for configuring the first bandwidth for the terminal device.

34. The method according to claim 33, wherein the first information is an RRC configuration.

35. The method according to any one of claims 20 to 34, wherein switching for the first bandwidth is triggered based on a service requirement of the terminal device, or
switching for the first bandwidth is triggered based on mobility of the terminal device.

36. The method according to any one of claims 20 to 35, wherein the first bandwidth is a first bandwidth part BWP, and/or the second bandwidth is a second BWP.

37. The method according to any one of claims 21 to 24, 31, and 36, wherein the first bandwidth and the second bandwidth belong to the first cell, or
the first bandwidth and the second bandwidth belong to different cells.

38. The method according to any one of claims 20 to 37, wherein at least two bandwidths among the plurality of bandwidths satisfy one or more of following:
the at least two bandwidths are contiguous in frequency domain;
the at least two bandwidths are non-contiguous in frequency domain;
the at least two bandwidths are located in different frequency bands; or
the at least two bandwidths partially or fully overlap in frequency domain.

39. A terminal device, comprising:
a receiving unit, configured to receive first information transmitted by a network device, wherein the first information is associated with a first bandwidth in a first cell, and the first cell comprises a plurality of different bandwidths.

40. The terminal device according to claim 39, wherein the first information is used for instructing the terminal device to switch from the first bandwidth to a second bandwidth.

41. The terminal device according to claim 39, wherein the first information is used for instructing to activate the first bandwidth.

42. The terminal device according to claim 41, wherein an activation start time of the first bandwidth is later than an activation start time of a second bandwidth, and a deactivation time of the second bandwidth is later than the activation start time of the first bandwidth.

43. The terminal device according to claim 41 or 42, wherein the terminal device further comprises:
receiving, by the terminal device, second information transmitted by the network device, wherein the second information is used for instructing to deactivate the second bandwidth.

44. The terminal device according to any one of claims 39 to 43, wherein a granularity for indication by the first information is a bandwidth in the first cell.

45. The terminal device according to any one of claims 39 to 44, wherein the first information is physical layer signalling or a medium access control control element MAC CE.

46. The terminal device according to any one of claims 40 to 45, wherein the first information comprises one or more of following:
information for indicating whether to perform MAC reset;
information for indicating whether to perform a key change;
information for indicating whether to re-establish an RLC entity;
information for indicating whether to re-configure a packet data convergence protocol PDCP;
information for indicating whether to re-establish a PDCP;
information for indicating whether to perform PDCP data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

47. The terminal device according to any one of claims 40 to 45, wherein the receiving unit is further configured to:
receive third information transmitted by the network device, wherein the third information comprises one or more of following:
information for indicating whether to perform MAC reset;
information for indicating whether to perform key switching;
information for indicating whether to update a MAC entity;
information for indicating whether to re-configure a PDCP;
information for indicating whether to perform data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

48. The terminal device according to claim 47, wherein the first information is physical layer signalling, and/or the third information is an RRC message.

49. The terminal device according to any one of claims 46 to 48, wherein a granularity for indication by at least one of the first information or the third information is a bearer of the terminal device.

50. The terminal device according to any one of claims 39 to 49, wherein the receiving unit is further configured to:
receive configuration information transmitted by the network device, wherein the configuration information is used for configuring the first bandwidth and/or the second bandwidth for the terminal device.

51. The terminal device according to claim 50, wherein the configuration information is a radio resource control RRC configuration, and/or
the first information is physical layer signalling or a MAC CE.

52. The terminal device according to claim 39, wherein the first information is used for configuring the first bandwidth for the terminal device.

53. The terminal device according to claim 52, wherein the first information is an RRC configuration.

54. The terminal device according to any one of claims 39 to 53, wherein switching for the first bandwidth is triggered based on a service requirement of the terminal device, or
switching for the first bandwidth is triggered based on mobility of the terminal device.

55. The terminal device according to any one of claims 40 to 43, wherein the first bandwidth is a first bandwidth part BWP, and/or the second bandwidth is a second BWP.

56. The terminal device according to any one of claims 40 to 43, 52, and 55, wherein the first bandwidth and the second bandwidth belong to the first cell, or
the first bandwidth and the second bandwidth belong to different cells.

57. The terminal device according to any one of claims 39 to 56, wherein at least two bandwidths among the plurality of bandwidths satisfy one or more of following:
the at least two bandwidths are contiguous in frequency domain;
the at least two bandwidths are non-contiguous in frequency domain;
the at least two bandwidths are located in different frequency bands; or
the at least two bandwidths partially or fully overlap in frequency domain.

58. A network device, comprising:
a transmitting unit, configured to transmit first information to a terminal device, wherein the first information is associated with a first bandwidth in a first cell, and the first cell comprises a plurality of different bandwidths.

59. The network device according to claim 58, wherein the first information is used for instructing the terminal device to switch from the first bandwidth to a second bandwidth.

60. The network device according to claim 58, wherein the first information is used for instructing to activate the first bandwidth.

61. The network device according to claim 60, wherein an activation start time of the first bandwidth is later than an activation start time of a second bandwidth, and a deactivation time of the second bandwidth is later than the activation start time of the first bandwidth.

62. The network device according to claim 60 or 61, wherein the transmitting unit is configured to transmit second information to the terminal device, wherein the second information is used for instructing to deactivate the second bandwidth.

63. The network device according to any one of claims 58 to 62, wherein a granularity for indication by the first information is a bandwidth in the first cell.

64. The network device according to any one of claims 58 to 63, wherein the first information is physical layer signalling or a medium access control control element MAC CE.

65. The network device according to any one of claims 59 to 64, wherein the first information comprises one or more of following:
information for indicating whether to perform MAC reset;
information for indicating whether to perform a key change;
information for indicating whether to re-establish an RLC entity;
information for indicating whether to re-configure a packet data convergence protocol PDCP;
information for indicating whether to re-establish a PDCP;
information for indicating whether to perform PDCP data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

66. The network device according to any one of claims 59 to 64, wherein the transmitting unit is configured to transmit third information to the terminal device, wherein the third information comprises one or more of following:
information for indicating whether to perform MAC reset;
information for indicating whether to perform key switching;
information for indicating whether to update a MAC entity;
information for indicating whether to re-configure a PDCP;
information for indicating whether to perform data recovery;
information for instructing to perform MAC reset;
information for instructing to perform a key change;
information for instructing to re-establish an RLC entity;
information for instructing to re-configure a PDCP;
information for instructing to re-establish a PDCP; or
information for instructing to perform PDCP data recovery.

67. The network device according to claim 66, wherein the first information is physical layer signalling, and/or the third information is an RRC message.

68. The network device according to any one of claims 65 to 67, wherein a granularity for indication by at least one of the first information or the third information is a bearer of the terminal device.

69. The network device according to any one of claims 58 to 62, wherein the transmitting unit is further configured to transmit configuration information to the terminal device, wherein the configuration information is used for configuring the first bandwidth and/or the second bandwidth for the terminal device.

70. The network device according to claim 69, wherein the configuration information is a radio resource control RRC configuration, and/or
the first information is physical layer signalling or a MAC CE.

71. The network device according to claim 58, wherein the first information is used for configuring the first bandwidth for the terminal device.

72. The network device according to claim 71, wherein the first information is an RRC configuration.

73. The network device according to any one of claims 58 to 72, wherein switching for the first bandwidth is triggered based on a service requirement of the terminal device, or
switching for the first bandwidth is triggered based on mobility of the terminal device.

74. The network device according to any one of claims 58 to 62 and 69, wherein the first bandwidth is a first bandwidth part BWP, and/or the second bandwidth is a second BWP.

75. The network device according to any one of claims 58 to 62, 69, and 74, wherein the first bandwidth and the second bandwidth belong to the first cell, or
the first bandwidth and the second bandwidth belong to different cells.

76. The network device according to any one of claims 58 to 75, wherein at least two bandwidths among the plurality of bandwidths satisfy one or more of following:
the at least two bandwidths are contiguous in frequency domain;
the at least two bandwidths are non-contiguous in frequency domain;
the at least two bandwidths are located in different frequency bands; or
the at least two bandwidths partially or fully overlap in frequency domain.

77. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 19.

78. A network device, comprising a transceiver, a memory, and a processor, wherein the memory is configured to store a program, and the processor is configured to invoke the program in the memory and control the transceiver to transmit or receive a signal, to cause the network device to execute the method according to any one of claims 20 to 38.

79. An apparatus, comprising a processor configured to invoke a program from a memory, to cause the apparatus to execute the method according to any one of claims 1 to 38.

80. A chip, comprising a processor, configured to invoke a program from a memory to cause a device installed with the chip to execute the method according to any one of claims 1 to 38.

81. A computer-readable storage medium, wherein the computer-readable storage medium stores a program, and the program causes a computer to execute the method according to any one of claims 1 to 38.

82. A computer program product, comprising a program that causes a computer to execute the method according to any one of claims 1 to 38.

83. A computer program, wherein the computer program causes a computer to execute the method according to any one of claims 1 to 38.
